# EUROPÄISCHE PATENTANMELDUNG

(11) **EP 1 086 929 A1**
(43) Veröffentlichungstag der Anmeldung: **28.03.2001**
(21) Anmeldenummer: 99115262.0
(22) Anmeldetag: 02.08.1999
(51) Int. Cl.: C02F 9/12, C02F 9/14

(54) **Verfahren zur Nutzwasseraufbereitung für einen wenigstens teilweise geschlossenen Wasserkreislauf**

(71) Anmelder: NOPA Ltd., Dublin 2 (IE)
(72) Erfinder: von Nordenskjöld, Reinhart, 85658 Egmating-Münster (DE)
(74) Vertreter: Maiwald, Walter, Dr. Dipl.-Chem.

(57) **Zusammenfassung**

Verfahren zur Nutzwasseraufbereitung für einen wenigstens teilweise geschlossenen Wasserreinigungs- und Wasserbeschaffungskreislauf umfassend drei nacheinander geschaltete Reinigungsschritte I bis III, wobei der Nutzwasseraufbereitungsanlage mit Nutzwasserentnahmevorrichtungen Wasser von wenigstens einem, vorzugsweise von drei unterschiedlichen Verbrauchern, wie Landwirtschaft, Gartenbau, Haushalte, Industrien oder dergleichen zugeführt wird, und das Abwasser in
- einem ersten biologischen Reinigungsschritt I gereinigt wird, und so ein Wasser mit einer Wasserqualität erhalten wird, das wenigstens zur Verwendung in der Landwirtschaft, im Gartenbau und/oder Löschwasser geeignet ist;
- einem zweiten Reinigungsschritt II mittels Filter(n) zur Entfernung von Schwebstoffen und Partikeln durch Filterung weiter aufbereitet wird, wobei Wasser mit einer Wasserqualität erhalten wird, das wenigstens zur Verwendung als Toilettenspülwasser geeignet ist; und
- einem dritten Reinigungsschritt III resthygenisiert wird, vorzugsweise mittels einer Ultrafiltrationsstufe, UV-Strahlung, Niederdruckultrafiltration und/oder durch Zusatz chemischer Stoffe, wobei Wasser mit einer Wasserqualität erhalten wird, welches wenigstens zur Verwendung als Brauchwasser, wie Badewasser, Waschwasser und/oder Reinigungswasser geeignet ist.

## Beschreibung

Die vorliegende Erfindung betrifft ein Verfahren zur Nutzwasseraufbereitung für einen wenigstens teilweise geschlossenen Wasserkreislauf, eine Vorrichtung zur Nutzwasseraufbereitung und die Verwendung dieser Vorrichtung zur Aufbereitung von Abwasser.

Abwasserkläranlagen sind im Stand der Technik gut bekannt. Das Prinzip solcher Abwasserkläranlagen beruht darauf, daß das von diesen Anlagen geklärte bzw. gereinigte Abwasser häufig mit guter Wasserqualität in einen Fluß oder See abgeführt wird. So werden weltweit, insbesondere auch in Trockengebieten, täglich Millionen von Kubikmetern Wasser aus Kläranlagen in mehr oder weniger gereinigter Form in Flüsse, Seen und Meere abgeleitet. Dies ist nicht nur teuer, sondern auch insbesondere unter Berücksichtigung der knappen weltweit zur Verfügung stehenden Wasserressourcen sehr unwirtschaftlich, das aus Kläranlagen stammende Wassser nicht wieder in den Wasserkreislauf unmittelbar zurückzuführen, sondern durch Ableiten einer Nutzung zu entziehen. Es gibt zwar die Wasseraufbereitung von Regenwasser und/oder Oberflächenwasser oder auch Meerwasser, das nach Aufbereitung verwertet wird, aber auch in diesen Fällen wird dieses Wasser dann als Abwasser abgeleitet und nicht wiederverwertet und so den Verbrauchern, wie Haushalten, Industrien, Landwirtschaft und dergleichen entzogen, mit dem Ergebnis der Verschwendung der natürlichen Ressourcen.

Ein weiterer Nachteil der herkömmlichen Kläranlagen ist, daß das den Flüssen oder Seen zugesetzte gereinigte Wasser dort einer unkontrollierten Verschmutzung ausgesetzt ist und so bei Entnahme erneut aufwendig gereinigt werden muß.

Noch ein Nachteil ist, daß bei herkömmlichen Abwasserkläranlagen ein hoher biologischer Überschußschlammanteil anfällt.

Zusammenfassend ist zu sagen, daß Kläranlagen einseitig auf die Reinigung von Abwasser auf Vorfluterqualität ausgerichtet sind und trotz dieser aufwendigen Technik, Verwaltung, Labors etc. die Chance wiederverwendbares Wasser zu gewinnen nicht genutzt wird.

Angesichts des weltweit steigenden und sich konzentrierenden Wasserbedarfs - Mexikostadt hat beispielsweise über 20 Millionen Einwohner - und unter Berücksichtigung, daß mancherorts örtliche Quellen stetig versalzen oder schon bereits versiegt sind, besteht daher ein großer Bedarf an einem Wasserreinigungs- und Wasserbeschaffungsverfahren für verschmutzte Wässer das Wasser für unterschiedlichste Verbrauchsarten zur Verfügung stellt, ohne daß das Wasser nach Verwendung in Form von geklärten Abwasser durch Einleiten in Flüsse, Seen, Meere oder dergleichen der unmittelbaren Wiederverwertung entzogen wird. Ferner besteht der Bedarf an einem Verfahren, das energiesparend und kostengünstig ist, weniger biologischen Überschußschlamm erzeugt sowie Wasser unterschiedlicher Wasserqualitäten zur Verfügung stellt.

Die Nachteile im Stand der Technik werden durch das erfindungsgemäße Verfahren zur Nutzwasseraufbereitung für einen wenigstens teilweise geschlossenen Wasserreinigungs- und Wasserbeschaffungskreislauf gelöst, umfassend drei nacheinander geschaltete und aufeinander abgestimmte Reinigungsschritte I bis III, wobei der Nutzwasseraufbereitungsanlage mit Nutzwasserentnahmevorrichtungen Wasser von wenigstens einem, vorzugsweise von drei unterschiedlichen Verbrauchern, wie Landwirtschaft, Gartenbau, Haushalte, Industrien oder dergleichen zugeführt wird, und das Abwasser in
- einem ersten biologischen Reinigungsschritt I mechanisch vorgereinigt, voll biologisch gereinigt und/oder biologisch hygenisiert wird, und so ein Wasser mit einer Wasserqualität erhalten wird, das wenigstens zur Verwendung in der Landwirtschaft, im Gartenbau und/oder Löschwasser geeignet ist;
- einem zweiten Reinigungsschritt II in dem das Wasser des Reinigungsschrittes I nach biologischer P- und N-Entfernung, im Reinigungsschritt II mittels Filter(n), zur Entfernung von Schwebstoffen und Partikeln durch Filterung, vorzugsweise durch Einsatz von aktiven Wurzelraumfilter(n), und/oder kombinierten aktiven Wurzelraumfilter(n) mit Sandfilter(n) aufbereitet wird, wobei Wasser mit einer Wasserqualität erhalten wird, das wenigstens zur Verwendung als Toilettenspülwasser geeignet ist; und
- einem dritten Reinigungsschritt III in dem das Wasser basierend auf den Reinigungsschritt I und II resthygenisiert und/oder mittels einer Ultrafiltrationsstufe feingefiltert wird, beispielsweise mittels UV-Strahlung, Ultra-filtration, Niederdruckultrafiltration und/oder durch Zusatz chemischer Stoffe, wobei Wasser mit einer Wasserqualität erhalten wird, welches wenigstens zur Verwendung als Brauchwasser, wie Badewasser, geeignet ist; wobei zu reinigendes Wasser die Reinigungsschritte I, II und/oder III jeweils mehrfach durchlaufen kann; und wobei Wasser, der Reinigungsschritte I, II und/oder III dem Verbraucher(n) zur Wiederverwendung zugeführt wird, das nach Gebrauch in den Wasserkreislauf zur Nutzwasseraufbereitung rückgeführt wird, wobei Wasser, das dem Wasserkreislauf, beispielsweise zur Bewässerung in der Landwirtschaft, entnommen wurde und nicht in den Wasserkreislauf zurückgeführt wird, durch Frisch-Wasser mit einer Qualität besser als das der Reinigungsstufe I zugeführte Wasser, vorzugsweise mit einer Qualität besser als der Reinigungsstufe II zugeführte Wasser, und besonders bevorzugt durch Wasser mit Trinkwasserqualität ersetzt wird.

Weitere vorteilhafte Ausführungsformen sind in den Unteransprüchen angegeben.

Das erfindungsgemäße Verfahren zur Nutzwasseraufbereitung umfaßt wenigstens drei Reinigungsschritte I bis III, die im weiteren als gestaffelt geschaltete Dreiermatrix bezeichnet wird. Es hat sich gezeigt, daß diese erfindungsgemäße gestaffelte Dreiermatrix einen überraschend hohen Grad an Energie- und Kosteneinsparungspotential, im Vergleich zu herkömmlichen Trinkwasser und Abwasser-Aufbereitungsanlagen, aufweist.

Chemische Stoffe, die im Reinigungsschritt III eingesetzt werden, können Flotationsmittel, Flockungsmittel, hygenisierende Chemikalien und/oder Mineralien umfassen.

Es hat sich nun überraschend deutlich gezeigt, daß das erfindungsgemäße Wasserreinigungsverfahren und Wasserbeschaffungsverfahren bei dem Wasser zwischen Verbrauchern und Wasseraufbereitungsanlage in einem wenigstens teilweise geschlossenen Kreislauf geführt wird sehr energiesparend und äußerst wirtschaftlich im Vergleich zu herkömmlichen Abwasserrenigungsanlagen und noch mehr gegenüber der klassischen Teilung von Trinkwasserbeschaffung und Abwasserreinigung ist. Dies liegt unter anderem daran, daß nicht wie im Stand der Technik die gesamte anfallende Abwassermenge geklärt wird, sondern Abwasser stufenweise geklärt wird, wobei Abwasserteilströme durch unterschiedliche und angepaßte Reinigungsstufen so geführt werden, daß Wasser an den jeweiligen Reinigungsstufen mit unterschiedlichen Wasserqualitäten anfällt und an die Verbraucher zur unmittelbaren Verwendung zugeführt werden kann. Aufgrund der erfindungsgemäßen Teilstromreinigung mit unterschiedlichen Wasserqualitäten ist die erfindungsgemäße Wasserreinigigungs- und Wasserbeschaffungskreislauf überraschenderweise wesentlich kostengünstiger als eine herkömmliche alleinige Abwasserreinigungsanlage.

Die Kosten für die Beschaffung von Trinkwasser im saudiarabischen Raum betragen etwa $3. Dagegen betragen die Kosten für die Bereitstellung von Trinkwasser bei dem erfindungsgemäßen Verfahren nur etwa $1,4, wenn man berücksichtigt, daß etwa 2/3 des benötigten Wassers keine Trinkwasserqualität erfordert und das Wasser in einem praktisch geschlossenen Kreislauf geführt wird.

Das auf der Dreiermatrix beruhende erfindungsgemäße Verfahren ist nicht nur für den kommunalen Bereich, sondern unter anderem auch für den Industriebereich geeignet. Hier kann man ohne Schwierigkeiten in fast allen Betrieben eine sogenannte Weißzone eine Grauzone und eine Schwarzzone formulieren. Die Schwarzzone umfaßt Wasser der Reinigungsstufe I und/oder II, geeignet zur Verregnung Kartoffelwäsche, Autowäsche, Hofwäsche und dergleichen. Die Grauzone umfaßt Wasser der Reinigungsstufe II und/oder III. Dieses Wasser bedarf einer weitergehenden Reinigung, insbesondere einer ersten Hygenisierung und am besten Filterung. Die Weißzone betrifft den sogenannten "Lebensmittelbereich". Hier darf nur Trinkwasser verwendet werden, wobei bei der Eigenversorgung mit Wasser die etwas milderen Gesetze der Eigenbrunnenversorgung gelten und nicht die überrregionalen Gesetze der Wasserversorgung, die ja einen besonders niedrigen Grad, insbesondere in bakteriologischer Hinsicht, fordern, weil das Wasser noch durch lange Rohrnetze und damit verbundene Verweilzeiten einem Zuwachs an Bakterien bis zum Konsumenten hin unterliegt.

Das erfindungsgemäße Verfahren dient somit nicht nur der Wasserreinigung, sondern auch der Wassererzeugung, wobei mittels der erfindungsgemäß angeordneten gestaffelten "Dreiermatrix" Wasser nur soweit gereinigt wird, wie es aus wirtschaftlichen Gründen des Betriebs bzw. Verbrauchers hinsichtlich des jeweiligen Verwendungszwecks notwendig ist.

Erfindungsgemäß wird der Wasserreinigungskreislauf vorzugsweise in drei Stufen unterteilt, wobei in der ersten Stufe im wesentlichen organische Stoffe, insbesondere Kohlenstoff in CO₂ und andere C-Verbindungen überführt wird. In der zweiten Reinigungsstufe werden Stickstoff und Phosphor entfernt und in der dritten Reinigungsstufe werden auch noch vorhandene Bakterien und Viren praktisch vollständig entfernt.

An jeder Reinigungsstufe läßt sich gereinigtes Wasser mit der dieser Stufe entsprechenden Wasserqualität entnehmen und das an die Verbraucher zur unmittelbaren Verwendung geleitet wird. Nach Gebrauch wird dieses Wasser anschließend der Wasserreinigungsanlage wieder zugeführt, wobei der dem Wasserkreislauf entzogene Wasseranteil durch Frischwasser ersetzt wird.

Ein weiterer erfindungsgemäße Vorteil des Verfahrens ist, daß aufgrund der Wasserkreislaufführung, und der erfindungsgemäßen Gliederung in wenigstens drei aufeinanderfolgende Reinigungsschritte eine deutliche Reduzierung des biologischen Überschußschlamms erreicht wird.

Ein weiterer bedeutender Vorteil des erfindungsgemäßen Verfahrens liegt darin, das global gesehen und insbesondere in Wassermangelregionen die vorhandenen Ressourcen geschont werden, was sicher eine wichtige Zukunftsaufgabe ist.

Hinzuzufügen ist noch, daß beispielsweise Mexiko City und Jakarta zwar über umfangreiche Wasserreservoirs verfügen, die aber aufgrund ihres Verschmutzungsgrades mit toxischen Stoffen zur Trinkwasseraufbereitung nicht nutzbar sind. Es ist daher ein großer Nachteil, wenn man Abwasser hier einfach in Flüsse oder dergleichen ableitet, da für die Wiedergewinnung von Trinkwasser in unmittelbarer Nähe keine ausreichenden Wassermengen, die nicht kontaminiert sind, zur Verfügung stehen.

Es ist daher ein weiterer Vorteil des erfindungsgemäßen Verfahrens, um Wasserressourcen zu schaffen, daß man das Abwasser zur unmittelbaren Verwendung durch Verbraucher aufbereitet. Hierdurch lassen sich große Mengen Wasser, das sonst aus weit entfernten Quellen oder dergleichen herangeführt werden muß, einsparen.

Wie bereits eingangs beschrieben, wird bei dem erfindungsgemäßen Verfahren an den Reinigungsschritten I, II, III und/oder IV Wasser unterschiedlicher Wasserqualitäten erhalten und unmittelbar an die Verbraucher, wie Haushalte, Landwirtschaft, Industrien und/oder dergleichen abgegeben. Dies hat den Vorteil, daß das Wasser mit einer der Verbrauchsart entsprechenden Wasserqualität der Nutzwasseraufbereitungsanlage entnommen werden kann. Hierbei gewährleistet die erfindungsgemäße Staffelung der Reinigungsschritte I bis III in Form einer "Dreiermatrix" eine optimale angepaßte Reinigung und eine optimale Nutzung der gereinigten Abwässer und schont Frischwasserressourcen, da wie bereits ausgeführt, die direkte bzw. unmittelbare Wiederverwertung von Wasser geringerer bzw. angepaßter Wasserqualitäten des erfindungsgemäßen Wasserkreislaufs möglich ist, und hierbei die Einzelstufen im Zusammenwirken aber auch der Einzelschritt durch bewußte Anpassung an das jeweilige Reinigungsziel zu einer überraschend günstigen Gesamtwirtschaftlichkeit und sehr hohen Wassereinsparung führen, so daß Ballungszentren ihrer Umgebung Wasser nicht entziehen müssen.

Darüber hinaus wird das aus dem Wasserkreislauf stammende Wasser mit unterschiedlichen Wasserqualitäten nicht nach Gebrauch als Abwasser mittels einer Kläranlage mehr oder weniger gereinigt und dann in Flüsse und/oder dergleichen abgeleitet, sondern dem Wasserkreislauf der Nutzwasseraufbereitungsanlage gezielt und unmittelbar zur Wiederaufbereitung, zwecks Wiederverwertung durch den oder die Verbraucher, zugeführt.

In einer bevorzugten Ausführungsform des erfindungsgemäßen Verfahrens wird Brauchwasser von bis zu drei Brauchwasserqualitäten zur Verfügung gestellt.

Es hat sich nun gezeigt, daß, um eine Versalzung des Wassers des Nutzwasseraufbereitungskreislaufs zu vermeiden, es vorteilhaft ist, wenigstens einen Teil des Wassers des Kreislaufs durch Frisch-Wasser zu ersetzen und entsprechend einen Teil aus dem Kreislauf, vorzugsweise dorthin zu entlassen, wo erhöhte Salzgehalte hingenommen werden können oder sogar von Nutzen sind.

Frisch-Wasser im Sinne dieser Erfindung ist Wasser mit einer Qualität besser als das der Reinigungsstufe I zugeführte Wasser, vorzugsweise mit einer Qualität besser als das der Reinigungsstufe II zugeführte Wasser bzw. der Reinigungsstufe III zugeführte Wasser und besonders bevorzugt Wasser mit Trinkwasserqualität.

Es ist erfindungsgemäß bevorzugt, Wasser des Nutzwasserkreislaufs der Stufe I und/oder II, das beispielsweise in der Landwirtschaft zum Bewässern oder für einfache Reinigungszwecke, beispielsweise von Straßen und Wegen verwendet wird und so dem Nutzwasserkreislauf zur Wiederaufbereitung nicht mehr zur Verfügung steht, durch gleiche Anteile von Frisch-Wasser zu ersetzen.

Vorzugsweise wird vom Verbraucher aus dem erfindungsgemäßen Nutzwasserkreislauf der Reinigungsstufen I, II und/oder III entnommenes Wasser mit einem Volumenanteil von wenigstens 10 Vol.-%, vorzugsweise wenigstens 20 Vol.-%, besonders bevorzugt wenigstens 30 Vol.-% und noch bevorzugter von wenigstens 40 Vol.-%, bezogen auf das Gesamtvolumen des Wassers der Nutzwasseraufbereitungsanlage umfassend die Reinigungsschritte I bis III, dem Wasserkreislauf nicht wieder zugeführt und durch Frisch-Wasser zu gleichen Anteilen ersetzt.

Besonders bevorzugt ist es, wenn wenigstens 20 Vol.-% bis 40 Vol.-%, vorzugsweise 25 Vol.-% bis 35 Vol.-% und besonders bevorzugt etwa 30 Vol.-% Wasser mit einer Wasserqualität zur Verwendung in der Landwirtschaft, im Gartenbau und/oder als Löschwasser des Reinigungsschritts I dem Wasserkreislauf vom Verbraucher entnommen wird und im Kreislauf durch Frisch-Wasser zu gleichen Anteilen ersetzt wird, um so eine Übersalzung des Kreislaufs zu verhindern.

Natürlich kann das erfindungsgemäße Verfahren auch einen Entsalzungsschritt, beispielsweise im Falle extremer Wasserknappheit, umfassen, um so auch einen geschlossenen bzw. praktisch vollständig geschlossenen Nutzwasserkreislauf zu erhalten. Ein solcher Entsalzungsschritt, z.B. Umkehrosmose oder Eindampfung ist aber energieaufwendig und verschlechtert teilweise die Wirtschaftlichkeit des erfindungsgemäßen Verfahrens.

Desweiteren hat sich gezeigt, daß der Ersatz von 20-40 Vol.-%, vorzugsweise etwa 30 Vol.-% Wasser, das dem Wasserkreislauf als Frisch-Wasser zugeführt wird, optimal ist und die Kosten der Wasseraufbereitung im Vergleich zum herkömmlichen Vorgehen um ein vielfaches verringert.

Hervorzuheben ist, daß das erfindungsgemäße Verfahren zur Wasseraufbereitung und Wasserwiedergewinnung deutlich kostengünstiger im Vergleich zu üblichen Kläranlagen arbeitet, bei denen lediglich eine Klärung von Abwasser erreicht wird, das anschließend wie bereits erwähnt zur unmittelbaren Nutzung von Verbrauchern nicht zur Verfügung steht.

Dies wird auch verständlich, wenn man berücksichtigt, daß bei dem erfindungsgemäß beanspruchten Dreiermatrix-Wasserkreislaufs Wasser gereinigt und als bedarfs- bzw. verbrauchsabhängige Wasserqualitäten an die Verbraucher abgegeben wird, und nicht wie bisher im Stand der Technik üblich, nahezu ausschließlich eine Wassersorte abgeleitet wird. Es hat sich nämlich gezeigt, daß die Anforderungen der einzelnen Verbraucher an die Wasserqualität in etwa zwei Drittel der Fälle den Einsatz von Trinkwasser nicht erfordert.

Erfindungsgemäß vorteilhaft ist es, wenn wenigstens 10 bis 100 Vol.-%, vorzugsweise wenigstens 20 bis 50 Vol.-% und besonders bevorzugt 30 Vol.-% aufbereitetes Nutzwasser der Reinigungsstufen I, II und/oder III an Verbraucher abgegeben wird, wobei die jeweiligen Volumenanteile der Nutzwasserentnahmen an den Reinigungsschritten I, II und III ≤ 100 Vol.-% ist. Dies ist ohne weiteres verständlich, da mehr Wasser als in dem Nutzwasserkreislauf enthalten ist, nicht entnommen werden kann.

Bevorzugt ist es, wenn die Entnahmen von Wasser durch die Verbraucher mit einer Wasserqualität geeignet zur Verwendung in der Landwirtschaft, im Gartenbau und/oder als Löschwasser und/oder für einfache Reinigungszwecke, Wasser mit einer Wasserqualität, geeignet wenigstens zur Verwendung als Toilettenspülwasser und Wasser mit einer Wasserqualität geeignet zur Verwendung als Brauchwasser, wie Badewasser und dergleichen, jeweils einen Anteil von etwa 33 % ausmachen. Gegebenenfalls kann auch ein vierter Reinigungsschritt IV zur Gewinnung von Wasser mit Trinkwasserqualität den Reinigungsschritten I bis III nachgeschaltet werden, wobei in Schritt IV wieder an den Verbrauch angepaßte Wasser durch eine Niederdruckultrafiltrationsanlage und/oder Umkehrosmoseanlage geleitet wird und/oder einer natürlichen und/oder künstlichen UV-Strahlungsquelle ausgesetzt wird. Vorzugsweise ist im Schritt IV als Warn- und Regelorgan ein Mikropartikel-Detektor nachgeschaltet.

Die Reinigungsschritte I, II, III und/oder IV des erfindungsgemäßen Verfahrens lassen sich zu einem, zwei oder drei Reinigungsschritten zusammenfassen.

In einer weiteren Ausgestaltung des erfindungsgemäßen Verfahrens wird biologischer Überschußschlamm, der bei der Nutzwasseraufbereitung anfällt, dem vom Verbraucher entnehmbaren Wasser, vorzugsweise Wasser geeignet für die Landwirtschaft und den Gartenbau, als Dünger zudosiert.

Vorteilhaft ist es, 1-100 ml/l biologischen Überschußklärschlamm, bevorzugt 2-20 ml/l biologischen Überschußklärschlamm und noch bevorzugter 5-10 ml/l biologischen Überschußklärschlamm dem an die beispielsweise landwirtschaftlichen Verbraucher abgegebenen gereinigten Wassers der Reinigungsstufe I oder II zuzufügen. Der biologische Überschußklärschlamm ist ein hervorragendes Düngemittel.

Ferner ist es vorteilhaft, daß der Reinigungsschritt I wenigstens 2, vorzugsweise 10, noch bevorzugter 20 und besonders bevorzugt > 30 alternierend angeordnete biologische Nitrifikations- und Denitrifikationszonen aufweist.

Durch Ausgestaltung wenigstens einer anaeroben/anoxischen Zone vorzugsweise im Reinigungsschritt I wird P (Phosphor-Verbindungen) biologisch weitestgehend aus dem Wasser entfernt.

Eine Reduzierung der Keimzahlen, vorzugsweise von Escherichia coli, Salmonella, Coliformes und/oder Fekalcoliformes von wenigstens 80%, vorzugsweise 80%, noch bevorzugter 90% und besonders bevorzugt von ≥ 99% wird errreicht, wenn die Schlammbelastung im Reinigungsschritt I, gemessen bei 20°C, im Bereich von 0,1 bis 0,02 Kg BSB₅/Kg TS d, vorzugsweise im Bereich von 0,6 bis 0,04 Kg BSB₅/Kg TS d und besonders bevorzugt bei 0,05 Kg BSB₅/Kg TS d liegt.

Fig. 1 zeigt einen üblichen nicht geschlossenen Wasserkreislauf.

Fig. 2 zeigt einen erfindungsgemäßen teilweise geschlossenen Wasserkreislauf.

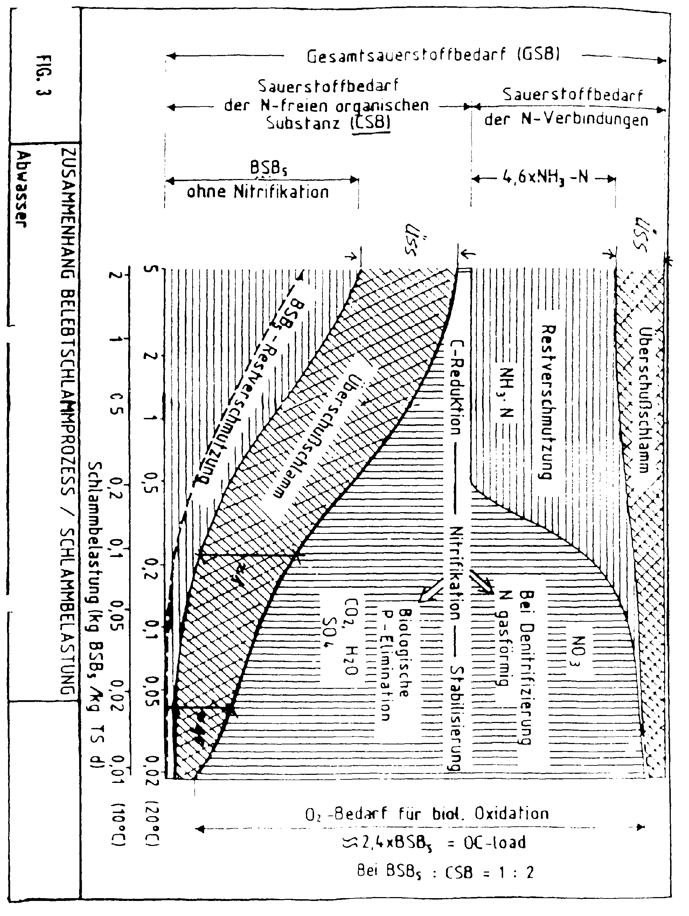

Fig. 3 zeigt eine biologische Reinigungsstufe.

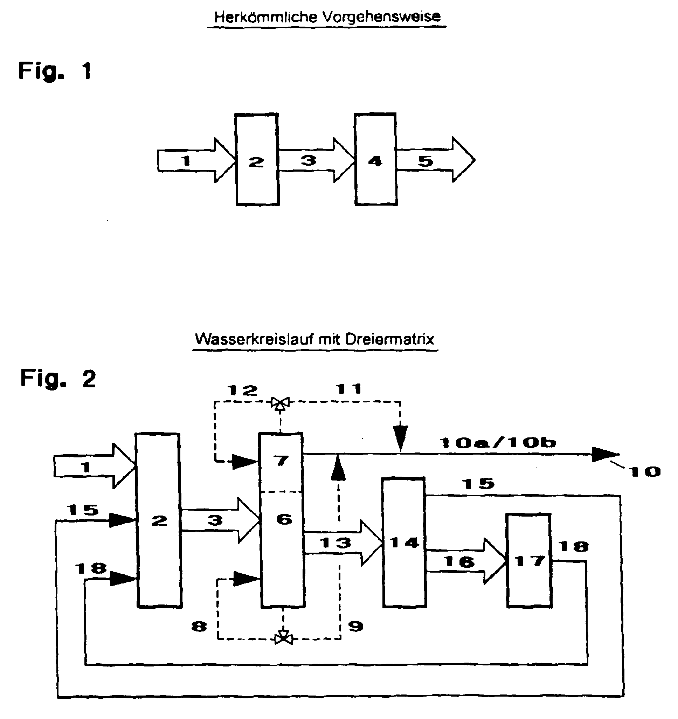

Die Fig. 1 zeigt einen üblichen, nicht geschlossenen Wasserkreislauf, wobei Frischwasser (1) mit Trinkwasserqualität den Verbrauchern (2) zugeführt wird und anschließend nach Gebrauch als Abwasser (3) einer Kläranlage (4) zugeführt wird, wobei geklärtes Abwasser (5) unmittelbar in Flüsse, Seen oder Meere abgeleitet wird.

Die Fig. 2 zeigen einen erfindungsgemäßen bevorzugten, im wesentlichen geschlossenen Wasserkreislauf, wobei den Verbrauchern (2) Wasser von unterschiedlichen Wasserqualitäten wie Frischwasser (1), vorzugsweise Trinkwasser (1), Wasser für den Fäkalbereich (15), Brauchwasser (18), geeignet zur Verwendung als Waschwasser; und Wasser (10a, 10b) mit einer Wasserqualität beispielsweise geeignet zur Verwendung in der Landwirtschaft, im Gartenbau und/oder als Löschwasser, zugeführt wird. Der Teil des Wassers (10a,10b), den die Verbraucher dem Wasserkreislauf entziehen, beispielsweise zum Bewässern von Feldern oder dergleichen, wird durch Frischwasser (1) ersetzt, um die Gesamtmenge an Wasser des Wasserkreislaufs konstant zu halten. Vorzugsweise werden circa. 30 Gew.-% - 40 Gew.-% Wasser dem Wasserkreislaufs kontinuierlich entzogen und durch Frischwasser (1) gleichen Anteils ersetzt, um eine Versalzung des Wasserkreislaufs zu vermeiden.

Das den Verbrauchern (2) zugeführte Wasser (1/15/18) wird nach Gebrauch in Form von Abwasser (3) einer biologischen Reinigungsstufe I (6/7) zugeführt, wobei das Abwasser biologisch gereinigt und/oder biologisch hygenisiert (6/7) wird. Vorzugsweise werden zwischen 20 Gew.-% und 40 Gew.-% biologisch gereinigtes und/oder biologisch hygenisiertes Wasser (7), daß noch nicht von den Nährstoffen wie P und NO₃ haltigen Verbindungen befreit worden ist, über Wasserleitungen (10) den Verbrauchern zur unmittelbaren Verwendung an den jeweiligen Einsatzort zugeführt.

Ferner kann dem gereinigten Wasser aus Stufe (7) biologischer Überschußklärschlamm zugesetzt werden, der dann über die Leitungen (9/11), z.B. dem landwirtschaftlichen Verbraucher zur Verwendung mit Düngewirkung zugeführt wird. Die Leitungen (8) und (12) dienen der Zu- und/oder Abführung von üblichem Rücklaufschlamm.

Ein Teilstrom (13) des in der Reinigungsstufe I (6/7) biologisch gereinigten und biologisch hygenisierten Wassers wird im Reinigungsschritt II (14) mittels Filtern, zur Entfernung von Schwebstoffen und Partikeln, vorzugsweise durch Einsatz von aktiven Wurzelraumfiltern ggf. mit einer Ultrafiltrationsstufe weiter aufbereitet, wobei Wasser mit einer Wasserqualität erhalten wird, das wenigstens zur Verwendung als Toilettenspülwasser geeignet ist. Vorzugsweise werden zwischen 20 Gew.-% und 40 Gew.-% gereinigtes Wasser des Reinigungsschrittes (14) über eine Wasserleitung (15) zur unmittelbaren Verwendung an die Verbraucher (2) zurückgeführt.

Ein Teilstrom (16) des im Reinigungsschritt (14) gereinigten Wassers wird dem Reinigungsschritt (17) zugeführt, wobei im Reinigungsschritt (17) das Wasser mittels UV-Strahlung, Ultrafiltration, Niederdruckfiltration und/oder durch Zusatz chemischer Stoffe resthygenisiert wird, wobei Wasser mit einer Wasserqualität erhalten wird, welches wenigstens zur Verwendung als Brauchwasser zum Baden, Waschen und Reinigen geeignet ist. Gereinigtes Wasser des Reinigungsschrittes III (17) wird über eine Wasserleitung (18) an die Verbraucher (2) im Kreislauf zur unmittelbaren Verwendung zugeführt.

## Patentansprüche

1. Verfahren zur Nutzwasseraufbereitung für einen wenigstens teilweise geschlossenen Wasserreinigungs- und Wasserbeschaffungskreislauf umfassend drei nacheinander geschaltete Reinigungsschritte I bis III, wobei der Nutzwasseraufbereitungsanlage mit Nutzwasserentnahmevorrichtungen Wasser von wenigstens einem, vorzugsweise von drei unterschiedlichen Verbrauchern, wie Landwirtschaft, Gartenbau, Haushalte, Industrien oder dergleichen zugeführt wird, und das Abwasser in
- einem ersten biologischen Reinigungsschritt I mechanisch vorgereinigt, voll biologisch gereinigt und/oder biologisch hygenisiert wird, und so ein Wasser mit einer Wasserqualität erhalten wird, das wenigstens zur Verwendung in der Landwirtschaft, im Gartenbau und/oder Löschwasser geeignet ist;
- einem zweiten Reinigungsschritt II in dem das Wasser des Reinigungsschrittes I nach biologischer P- und N-Entfernung, im Reinigungsschritt II mittels Filter(n), zur Entfernung von Schwebstoffen und Partikeln durch Filterung, vorzugsweise durch Einsatz von aktiven Wurzelraumfilter(n), kombinierten aktiven Wurzelraumfilter(n) mit Sandfilter(n) weiter aufbereitet wird, wobei Wasser mit einer Wasserqualität erhalten wird, das wenigstens zur Verwendung als Toilettenspülwasser geeignet ist; und
- einem dritten Reinigungsschritt III in dem das Wasser basierend auf den Reinigungsschritt I und II resthygenisiert wird, vorzugsweise mittels einer Ultrafiltrationsstufe, UV-Strahlung, Niederdruckultrafiltration und/oder durch Zusatz chemischer Stoffe, wobei Wasser mit einer Wasserqualität erhalten wird, welches wenigstens zur Verwendung als Brauchwasser, wie Badewasser, Waschwasser und/oder Reinigungswasser geeignet ist; wobei zu reinigendes Wasser die Reinigungsschritte I, II und/oder III jeweils mehrfach durchlaufen kann; und wobei Wasser, der Reinigungsschritte I, II und/oder III dem Verbraucher(n) zur Wiederverwendung zugeführt wird, das nach Gebrauch in den Wasserkreislauf zur Nutzwasseraufbereitung rückgeführt wird, wobei Wasser, das dem Wasserkreislauf, beispielsweise zur Bewässerung in der Landwirtschaft, entnommen wurde und nicht in den Wasserkreislauf zurückgeführt wird, durch Frisch-Wasser mit einer Qualität besser als das der Reinigungsstufe I abgeführte Wasser, vorzugsweise mit einer Qualität besser als der Reinigungsstufe II oder III zugeführte Wasser, und besonders bevorzugt durch Wasser mit Trinkwasserqualität ersetzt wird.

2. Verfahren nach Anspruch 1, wobei vom Verbraucher entnommenes Wasser aus dem Wasserkreislauf der Reinigungsstufen I, II und/oder III mit einem Volumenanteil von wenigstens 10 Vol.-%, vorzugsweise wenigstens 20 Vol.-%, besonders bevorzugt wenigstens 30 Vol.-% und noch bevorzugter von wenigstens 40 Vol.-%, bezogen auf das Gesamtvolumen des Wassers der Nutzwasseraufbereitungsanlage umfassend die Reinigungsschritte I bis III, dem Wasserkreislauf nicht wieder zugeführt wird und durch Frisch-Wasser zu gleichen Anteilen ersetzt wird.

3. Verfahren nach Anspruch 1 oder 2, wobei 10-100 Vol.-%, vorzugsweise wenigstens 20-50 Vol.-% und besonders bevorzugt wenigstens 30 Vol.-% Nutzwasser der Reinigungsstufe I an Verbraucher(n), vorzugsweise zur landwirtschaftlichen Nutzung, abgegeben wird; 10-100 Vol.-%, vorzugsweise 20-50 Vol.-%, besonders bevorzugt wenigstens 40 Vol.-% Nutzwasser der Reinigungsstufe II an Verbraucher(n) abgegeben wird; und 10-100 Vol.-%, vorzugsweise 20-50 Vol.-% und besonders bevorzugt wenigstens 30 Vol.-% Nutzwasser der Reinigungsstufe III an Verbraucher(n) abgegeben wird; wobei die jeweiligen Volumenanteile der Nutzwasserentnahmen an den Reinigungsschritten I, II und III ≤ 100 Vol.-% sind.

4. Verfahren nach einem der Ansprüche 1-3, wobei ein vierter Reinigungsschritt IV zur Gewinnung von Wasser mit Trinkwasserqualität nachgeschaltet wird, wobei in Schritt IV Wasser durch eine Niederdruckultrafiltrationsanlage und/oder Umkehrosmoseanlage geleitet wird und/oder einer natürlichen und/oder künstlichen UV-Strahlungsquelle ausgesetzt wird und/oder Chemikalien zugesetzt werden und vorzugsweise ein Warn- und Regelorgan, wie Mikropartikel-Detektor, nachgeschaltet ist.

5. Verfahren nach einem der Ansprüche 1-4, wobei die Reinigungsschritte I, II, III oder IV zu einem, zwei oder drei Reinigungsschritten zusammengefaßt sind.

6. Verfahren nach einem der Ansprüche 1-5, wobei biologischer Überschußschlamm der bei der Nutzwasseraufbereitung anfällt dem vom Verbraucher(n) entnehmbaren Wasser, vorzugsweise Wasser geeignet für die Landwirtschaft und den Gartenbau, zudosiert wird.

7. Verfahren nach einem der Ansprüche 1-6, wobei der Reinigungsschritt I im Schritt (6) und/oder (7) wenigstens 2, vorzugsweise 10, noch bevorzugter 20 und besonders bevorzugt ≥ 30 alternierend angeordnete biologische Nitrifikations- und Denitrifikationszonen und/oder wenigstens eine anaerobe/ anoxische Zone, bei der Phosphat biologisch weitestgehend aus dem Wasser entfernt wird, aufweist.

8. Verfahren nach einem der Ansprüche 1 bis 7, wobei dem gereinigten Wasser des Reinigungsschrittes I wenigstens teilweise biologischer Überschußklärschlamm zudosiert wird, vorzugsweise mit 1-100 ml/l, noch bevorzugter mit 2-20 ml/l und noch bevorzugter mit 5-10 ml/l.

9. Verfahren nach einem der Ansprüche 1-8, wobei die Schlammbelastung im Reinigungsschritt I, gemessen bei 20°C im Bereich von 0,1 bis 0,02 Kg BSB₅/Kg TS d, vorzugsweise im Bereich von 0,06 bis 0,04 Kg BSB₅/Kg TS d und besonders bevorzugt bei 0,05 Kg BSB₅/Kg TS d liegt.

10. Vorrichtung zur Nutzwasseraufbereitung nach einem der vorherigen Ansprüche 1-9 für einen wenigstens teilweise geschlossenen Wasserkreislauf umfassend drei nacheinander geschaltete Reinigungsschritte I bis III.
